Europäisches Patentamt

European Patent Office

Office européen des brevets

(11) Numéro de publication: **0 408 404 A1**

## (12) DEMANDE DE BREVET EUROPEEN

(21) Numéro de dépôt: **90401482.6**

(22) Date de dépôt: **01.06.90**

(51) Int. Cl.⁵: **A01M 7/00**

(30) Priorité: **10.07.89 FR 8909238**

(43) Date de publication de la demande:
**16.01.91 Bulletin 91/03**

(84) Etats contractants désignés:
**DE ES FR IT**

(71) Demandeur: **BOBARD JEUNE S.A.**
**17, rue de Réon**
**F-21200 Beaune(FR)**

(72) Inventeur: **Delaunay, Just**
**Bevy**
**F-21220 Gevrey Chambertin(FR)**

(74) Mandataire: **Loyer, Bertrand et al**
**Cabinet Pierre Loyer 77, rue Boissière**
**F-75116 Paris(FR)**

(54) **Perfectionnements aux rampes de pulvérisation pour cultures en lignes.**

(57) Appareil de pulvérisation comportant au moins un bras relevable (3, 33), surplombant les cultures en position de travail et portant des tiges verticales descendantes (8) auxquelles sont fixés des moyens de pulvérisation (9). Ces ces tiges descendantes (8) sont constituées de façon à pouvoir se plier facilement tout en présentant, lorsqu' elles sont droites, un seuil de résistance à la flexion, de telle sorte qu'en position normale du travail elles soient relativement rigides et que, une fois le seuil de résistance à la flexion passé, elles soient souples.

FIG.1

## PERFECTIONNEMENTS AUX RAMPES DE PULVÉRISATION POUR CULTURES EN LIGNES

Dans le brevet français n° 2 409 003 (77 34711) déposé par la demanderesse le 18 novembre 1977, on a décrit une rampe de pulvérisation munie de tiges descendantes.

Comme cela est expliqué dans ledit brevet, il est connu d'employer des dispositifs de pulvérisation comportant un bras porteur horizontal portant une ou plusieurs tiges verticales situées en dessous du bras porteur de façon à pénétrer dans l'espace compris entre les rangs adjacents de cultures, des rangées de pieds de vignes par exemple.

Il s'avère cependant que du fait des heurts provoqués par le déplacement du tracteur sur le terrain inégal, ces tiges sont toujours en train d'osciller, ce qui nuit à la bonne répartition du produit à pulvériser. On a aussi essayé d'utiliser des tiges relativement rigides mais celles-ci se cassent facilement et doivent être régulièrement changées. Afin d'éviter ces cassures, il faut ainsi que les tiges puissent se ployer facilement quand elles heurtent accidentellement un obstacle (qui peut être le sol).

Un but de l'invention est ainsi de procurer des tiges qui maintiennent les buses dans une position et à une hauteur souhaitées permettant une pulvérisation efficace, tout en se pliant très facilement lorsqu'elles heurtent un obstacle.

Un autre but de l'invention est de proposer des tiges conçues de manière à permettre l'utilisation de tubes souples de diamètres importants descendant dans la végétation et à l'intérieur desquels de l'air est propulsé vers des pulseurs portés par les tiges.

Dans le brevet FR-A 2 409 003, les tiges sont portées par un bras porteur comportant deux éléments parallèles, la fixation du bras porteur et la fixation de chaque tige constituant avec ces deux éléments parallèles un parallélogramme déformable de façon que, lorsque le bras porteur est relevé par pivotement dans le plan vertical, les tiges portant les moyens de pulvérisation demeurent parallèles à elles-mêmes en même temps que rigides latéralement.

Ce dispositif donne entièrement satisfaction mais il s'avère qu'il peut être amélioré parce qu'il ne permet pas sur place un réglage en hauteur des tiges portant les moyens de pulvérisation et qu'il est compliqué de changer l'écartement entre les tiges et de supprimer la ou les tiges d'extrémité lorsque l'on arrive en bordure d'une parcelle.

Un autre but de la présente invention est de proposer une telle amélioration.

L'invention a pour objet un appareil de pulvérisation comportant au moins un bras relevable, surplombant les cultures en position de travail et portant au moins une tige verticale descendante auxquelles sont fixés des moyens de pulvérisation, caractérisé par le fait que les tiges descendantes sont constituées de façon à pouvoir se plier facilement tout en présentant, lorsqu'elles sont droites, un seuil de résistance à la flexion, de telle sorte qu'en position normale du travail elles soient relativement rigides et que, une fois le seuil de résistance à la flexion passé, elles soient souples.

La présente invention peut également comporter les dispositions suivantes:

a) le bras porteur est fixé à la monture de fixation par des moyens permettant de le faire coulisser le long de son axe;

b) le bras porteur est en deux parties de façon que son extrémité puisse être repliée sur elle-même;

c) les tiges sont fixées au bras porteur par des moyens permettant de les faire coulisser latéralement.

A titre d'exemples non limitatifs, on a représenté aux dessins annexés:

- figure 1, une vue schématique par l'arrière d'un tracteur enjambeur montrant un premier montage des tiges selon l'invention;
- figure 2, une vue schématique par l'arrière d'un tracteur enjambeur montrant un deuxième montage des tiges selon l'invention;
- figure 3, une vue par l'avant du dispositif de la figure 2 illustrant la disposition des conduites d'amenée du liquide de pulvérisation;
- figure 4, une vue en plan du dispositif de la figure 2;
- figures 5 et 6 deux vues de détail, l'une de face et l'autre de dessus illustrant l'articulation du bras de support du bras porteur de tiges;
- figure 7, une vue de détail, de face, illustrant la commande de relevage du bras support;
- figures 8 et 9, deux vues de détail illustrant la fixation à coulissement du bras porteur et des supports de tiges;
- figure 10, une vue en élévation latérale en coupe partielle du dispositif de fixation du bras support avec pivotement autour d'un axe vertical;
- figure 11, une vue partielle, en élévation latérale, de la figure 10;
- figure 12, une vue en plan de l'élément représenté aux figures 10 et 11;
- figures 13 et 14, deux variantes de réalisation du bras support;
- figure 15, une vue en perspective d'un détail des figures 13 et 14;
- figures 16 et 17, deux vues de détail illustrant un exemple de réalisation de la tige descendante comportant deux baguettes assemblées l'une à l'autre par un cavalier;

- figure 18, onze vues de onze variantes de la section transversale de la tige descendante.

- figures 19 et 20, deux vues de détail illustrant un autre exemple de réalisation de la tige descendante comportant deux baguettes assemblées l'une à l'autre par des colliers;

- figures 21 à 23, trois vues de détail illustrant un autre exemple de réalisation de la tige descendante comportant deux baguettes assemblées l'une à l'autre par des anneaux;

- figures 24 à 26, trois vues schématiques illustrant un autre exemple de réalisation de la tige descendante comportant deux baguettes assemblées l'une à l'autre par une pièce intercalaire, l'ensemble étant assemblé à l'aide d'un ruban élastique.

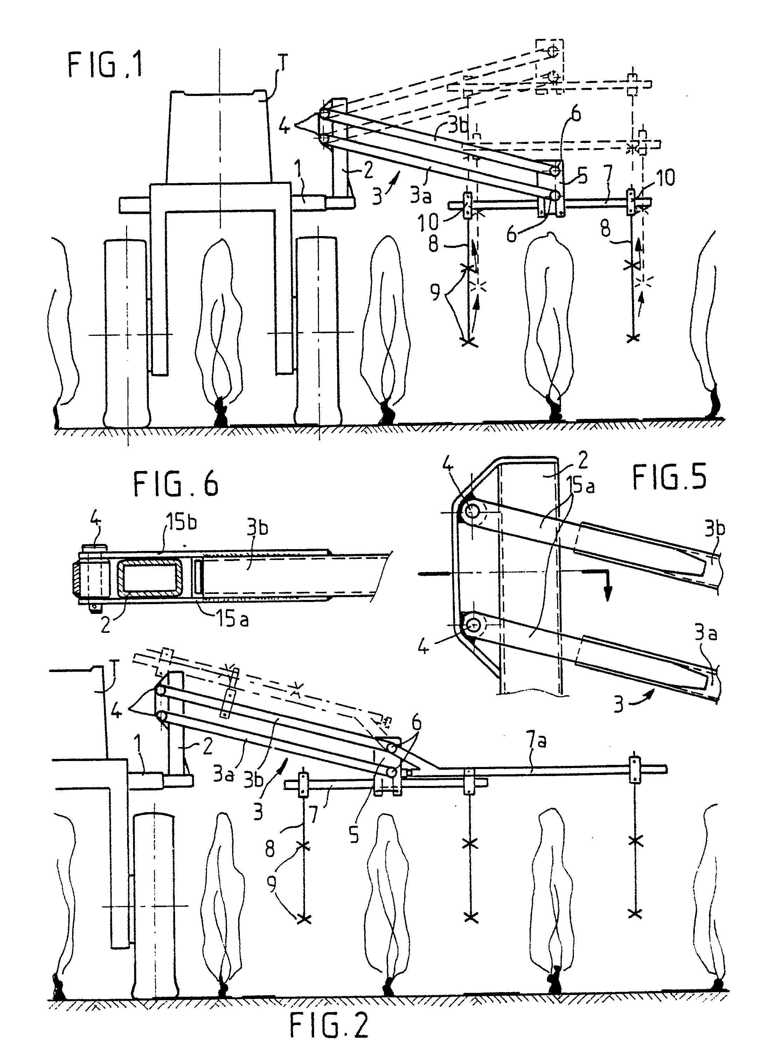

En se reportant à ces figures et plus spécialement aux figures 1 à 3, on voit que le dispositif de pulvérisation comporte un châssis 1, porté par un tracteur T, ledit châssis 1 portant le bras vertical 2. A ce bras vertical 2 est monté à pivotement un bras support 3 constitué de deux éléments ou barres parallèles 3a et 3b. Ces barres sont articulées au bras vertical l'un au-dessus de l'autre; de sorte qu'elles peuvent pivoter dans un plan vertical en s'abaissant ou en se relevant. A leurs extrémités opposées au bras vertical 2, ces barres 3a et 3b sont reliées à pivotement à une monture de fixation 5 par deux axes 6, parallèles aux axes 4 et situés comme eux verticalement l'un au-dessus de l'autre. La distance entre les deux axes 6 est égale à celle entre les deux axes 4 de sorte que les deux barres 3a et 3c ainsi que leurs quatre points d'articulation 4 et 6 forment un parallélogramme déformable.

A la monture de fixation 5 est fixé un bras porteur 7 qui porte une ou plusieurs tiges descendantes portant des moyens de pulvérisation 9 qui peuvent être des buses de type connu.

Il est évident que la monture de fixation 5 étant attelée à un parallélogramme déformable demeure parallèle à elle-même lorsque le bras 3 s'élève ou s'abaisse et donc que le bras porteur 7 et les tiges 8 vont s'élever et s'abaisser en demeurant parallèles à eux-mêmes.

Il est évident que plus le bras 3 sera court, plus son mouvement de soulèvement ou d'abaissement par rapport à la position moyenne horizontale représentée, provoquera un rapprochement des tiges descendantes 8 . Cependant, si, comme cela est représenté, ce bras 3 est assez long, le déplacement latéral des tiges 8 sera négligeable.

Cela présente des avantages importants par rapport aux dispositifs décrits dans le brevet FR-A-2 409 003.

Un avantage important est que l'on peut régler la position en hauteur des tiges 8 et donc des buses 9 en agissant uniquement sur le relevage du bras 3 et donc passer d'une vigne basse à une vigne haute (ou inversement) sans avoir à démonter pour régler en hauteur chaque tige descendante comme c'était le cas précédemment. En effet, dans le dispositif décrit au précédent brevet, lorsque l'on relève le bras, les tiges demeurent bien parallèles à elles-mêmes mais elles ne sont plus à la même hauteur, les tiges extérieures étant plus hautes que les tiges intérieures; de sorte que l'on ne peut pas pulvériser dans de telles conditions.

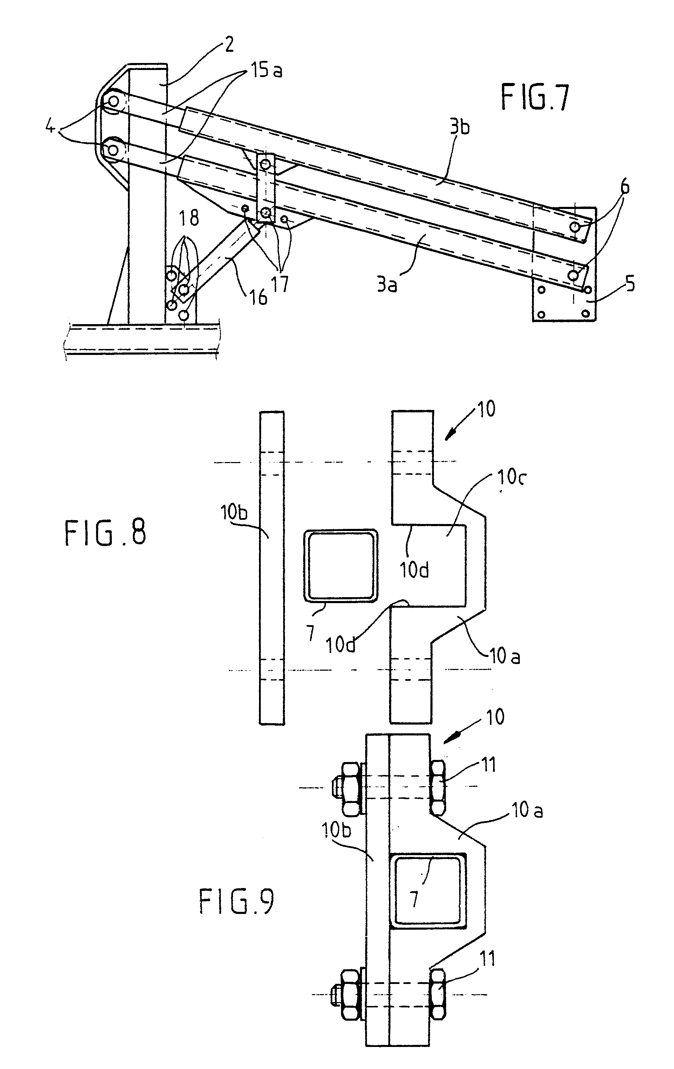

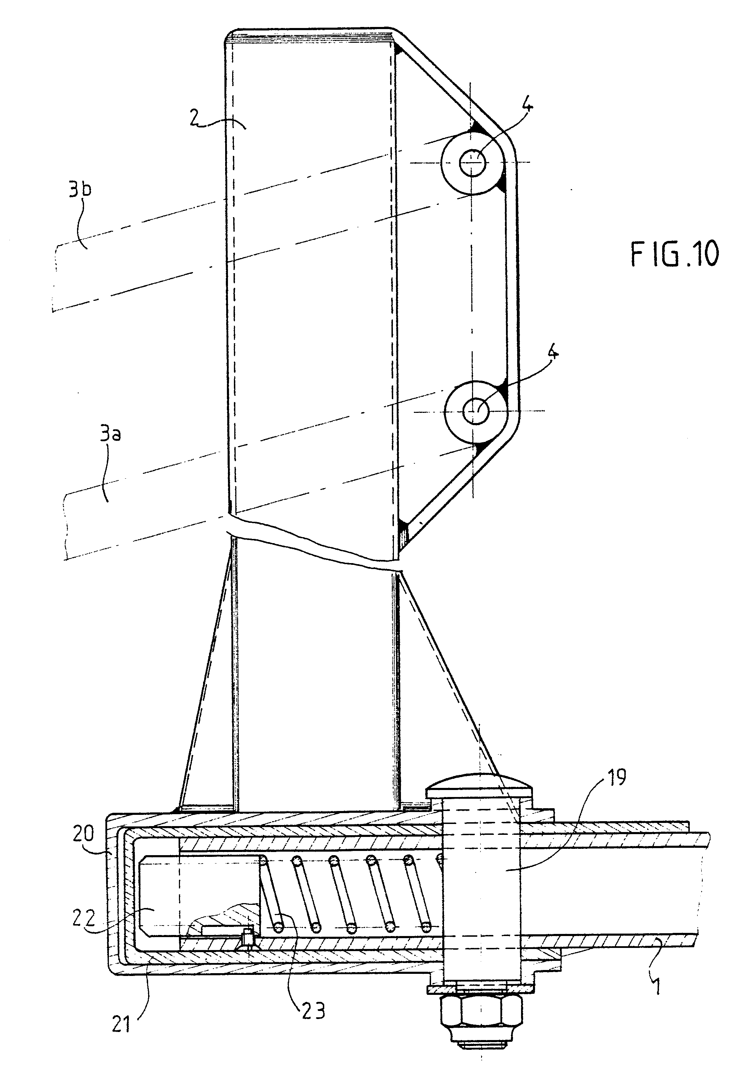

D'autre part, le bras porteur 7 étant un simple tube carré, on peut le faire facilement coulisser dans la monture 5 et faire facilement coulisser les tiges 8 sur la barre 7, ce qui était compliqué dans le dispositif précédent. Comme on le voit sur les figures 8 et 9, les pièces de fixation 10 des tiges descendantes 8 sont constituées par un cavalier 10a et une plaquette 10b réunis l'un à l'autre par des écrous et boulons 11. L'évidement central 10c du cavalier 10a a une profondeur inférieure à la largeur de la barre 7; de sorte que lorsque l'on visse les écrous et boulons 11, la partie centrale du cavalier 10a fléchit élastiquement et les bases 10d des parois latérales de l'évidement central 10c viennent pincer les côtés de la barre 7. De préférence, le cavalier 10a et la plaquette 10b sont en matière plastique, ce qui permet d'une part un coulissement aisé de la pièce 10 sur la barre 7 et un bon fléchissement dans la partie centrale 10a -donc un bon pincement- du cavalier 10. La fixation de la barre 7 sur la monture de fixation 5 peut avantageusement être réalisée de la même façon.

Sur la figure 1, on voit que la monture de fixation 5 porte une simple barre 7. Sur l'exemple de réalisation de la figure 2, on voit que l'on peut articuler sur l'un des axes 6 une barre supplémentaire 7a qui est repliable comme cela est représenté en pointillé.

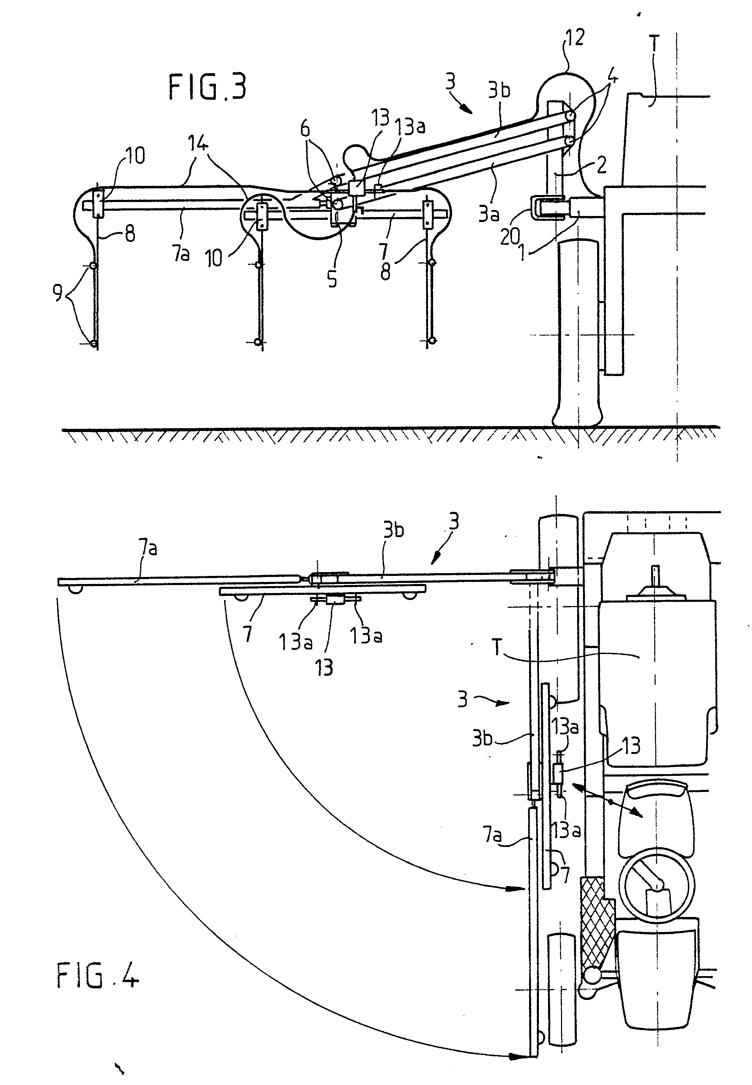

Sur la figure 3, on voit que pour l'alimentation en liquide des buses 9, on utilise une conduite primaire 12 amenant le liquide en provenance de la pompe (non représentée), cette canalisation 12 aboutissant à un boîtier de répartition 13 porté par la monture de fixation 5. De ce boîtier 13 partent les conduites secondaires 14, qui aboutissent aux buses 9 des différentes tiges descendantes 8. Ce boîtier de répartition 13 comporte autant de vannes ou robinets d'arrêt 13a qu'il y a de conduites 14. En se reportant à la figure 4, on voit qu'en faisant pivoter le bras 3 vers l'avant, on amène le boîtier 13 (et donc les vannes 13a) à portée de main du conducteur qui peut sélectionner les conduites 14 qu'il désire rendre actives ou inactives. Ceci est possible en étant dans le rang parce qu'on peut soulever simultanément toutes les tiges 8 au-dessus de la végétation, ce qui n'était pas possible avec l'ancien dispositif, la tige se trouvant le plus près du tracteur ne pouvant pas être soulevée au-dessus de la végétation.

En se reportant aux figures 5 et 6, on voit que de préférence, le bras vertical 2 est constitué par un tube de section rectangulaire qui est encadré par les deux branches 15a, 15b d'une fourche constituée par deux fers plats soudés à l'extrémité des bras 3a et 3b. Ainsi, le bras 3 reste correctement guidé lorsqu'il est abaissé ou relevé.

En se reportant à la figure 7, on voit que le relevage du bras 3 est commandé par un vérin hydraulique 16 qui est monté à pivotement d'une part sur le bras 3 en 17 et d'autre part à la base du bras vertical 2 en 18. De préférence, les points 17 et 18 sont multiples ce qui permet une grande variété de réglages.

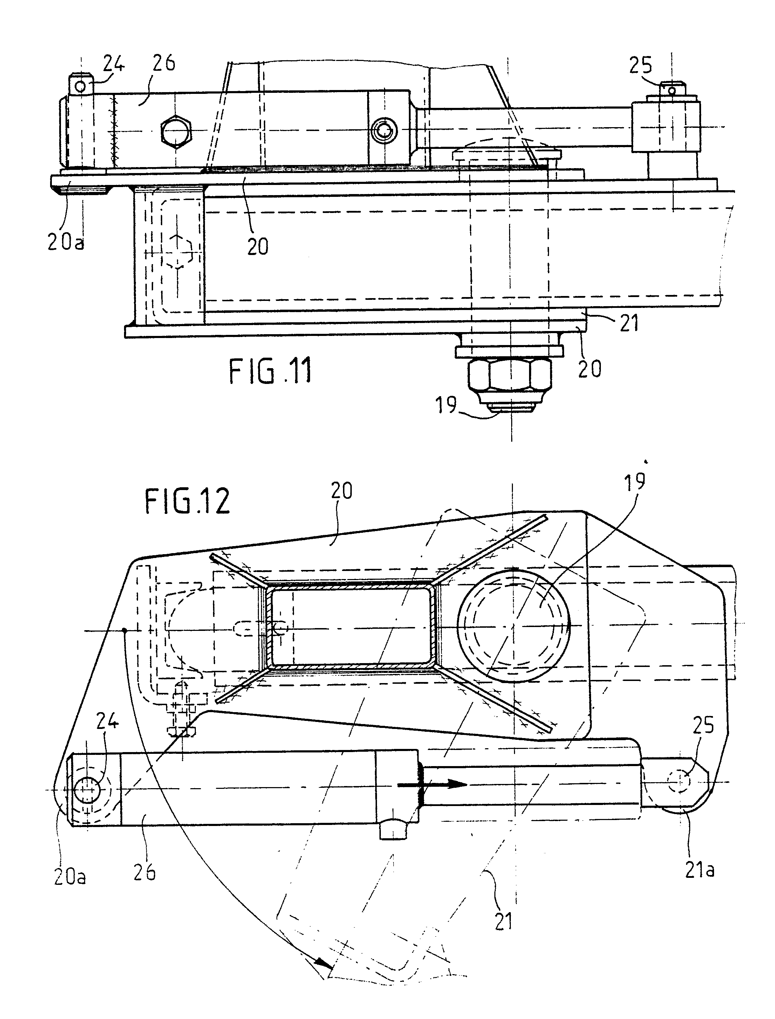

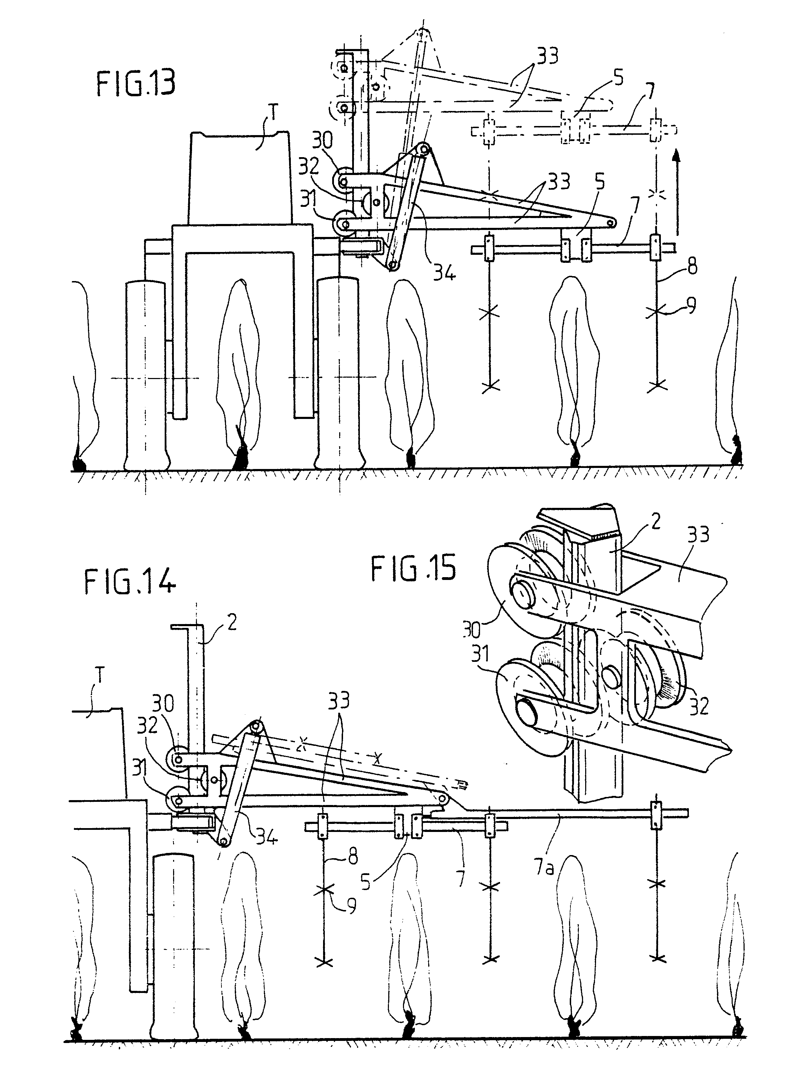

Les figures 10 à 12 illustrent la façon dont le bras vertical 2 est monté de façon à pouvoir pivoter autour d'un axe vertical. En se reportant à ces figures, on voit que le bras 2 est soudé à sa base à une chape 20, constituée par une plaque métallique repliée deux fois à 90° pour avoir une section en U. Cette chape en U est montée à pivotement sur un axe vertical 19. Sur cet axe 19 est également montée à pivotement une deuxième pièce en U, 21 qui est à l'intérieur de la chape 20. Cette deuxième pièce en U, 21 est contretenue par un poussoir 22 associé à un ressort 23. La chape 20 comporte un prolongement latéral 20a (figure 12) portant un axe 24 et la pièce 21 un prolongement latéral 21a portant un axe 25. Entre les deux axes 24 et 25 est disposé un vérin 26.

En actionnant le vérin 26, on fait pivoter la chape 20 autour de l'axe 19. Par contre lorsque le bras 3 heurte un obstacle alors que le vérin 26 n'est pas actionné, les deux pièces en U 20 et 21 pivotent ensemble en échappant au poussoir 22; ce qui constitue une sécurité. Dans ce cas, pour remettre les pièces 20 et 21 en place, le conducteur du tracteur T doit descendre et faire pivoter manuellement le bras 3.

Comme cela est représenté à la figure 10, les axes 4 sont, de préférence, disposés de façon que le plan vertical passant par leurs axes géométriques contient l'axe géométrique du pivot 19.

Les figures 13 à 15 représentent une variante de réalisation dans laquelle les mêmes éléments portent les mêmes références.

Dans ce cas, le bras vertical 2 a une section sensiblement carrée dont deux angles opposés sont engagés dans les gorges d'un ensemble de trois galets disposés en triangle, deux galets 30 et 31 roulant le long de l'arête intérieure du bras 2 et le galet 32 roulant le long de l'arête opposée, ledit galet 32 étant placé sur la médiatrice du segment de droite joignant les axes des deux autres galets 30 et 31.

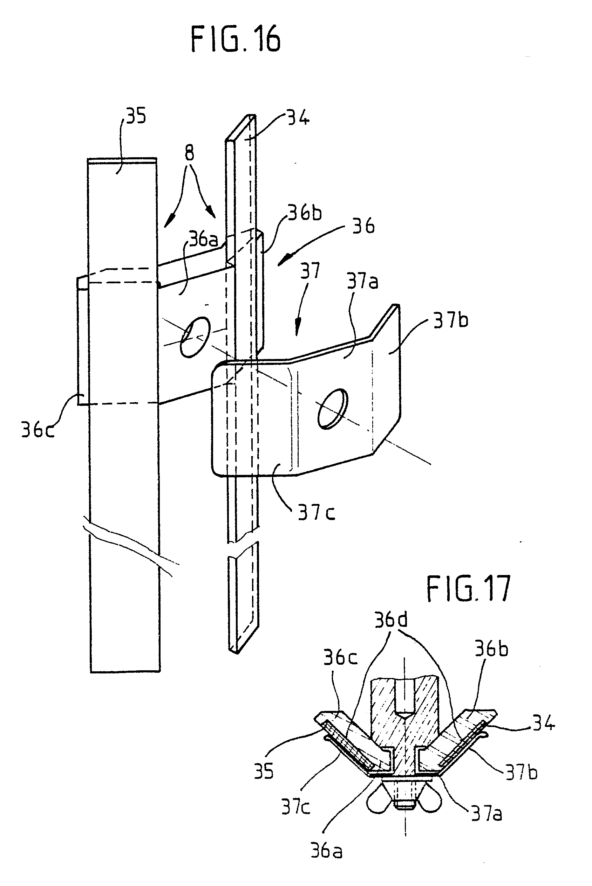

Dans ce cas, le bras porteur 33 n'est plus un parallélogramme déformable; il se déplace parallèlement à lui-même le long du bras vertical 2, sous l'action d'un vérin 34. La barre 7 (et éventuellement 7a, figure 14) est portée par la monture de fixation 5 et se déplace évidemment aussi parallèlement à elle-même.

Les figures 16 à 26 montrent comment les tiges descendantes 8 sont réalisées et montées sur la rampe de pulvérisation.

En se reportant d'abord à la figure 16, on voit que la tige 8 est constituée de deux baguettes 34 et 35 dont la section est un rectangle aplati, ces deux baguettes étant assemblées l'une à l'autre par l'intermédiaire de plusieurs cavaliers 36 à trois branches: une branche centrale 36a à laquelle sont rattachées deux branches latérales symétriques 36b et 36c faisant entre elles un angle de 90°. Ce cavalier 36 coopère avec un couvercle 37 également à trois branches de sorte que les baguettes 34 et 35, serrées entre le cavalier 36 et son couvercle 37 sont bloquées à 90° l'une de l'autre.

Il est bien évident que l'invention n'est pas limitée au cas où les deux baguettes sont à 90° l'une de l'autre, cet angle pouvant aller de 5° à 175°, l'angle de 90° étant seulement l'angle donnant les meilleurs résultats.

De préférence, l'angle que font entre elles les deux branches 37b et 37c du couvercle 37 est légèrement inférieur à l'angle que font entre elles les branches 36b et 36c du cavalier; de façon à obtenir un serrage énergique.

Chaque branche latérale 36b, 36c du cavalier 36 comporte en outre sur toute la hauteur de sa face tournée vers le couvercle 37 une rainure 3bd de réception de la baguette correspondante 34, 35. La rainure 36d a une section complémentaire de celle de la baguette de manière à maintenir celle-ci en place entre le cavalier 36 et le couvercle 37.

Cette disposition donne à l'assemblage une bonne rigidité; mais lorsque l'effort produit par un obstacle agit dans la direction de flexion des deux baguettes de manière à dépasser le seuil de résistance à la flexion de celles-ci, elles se déforment et prennent une position dans laquelle elles sont à plat dans le prolongement l'une de l'autre et elles se plient alors sans difficulté.

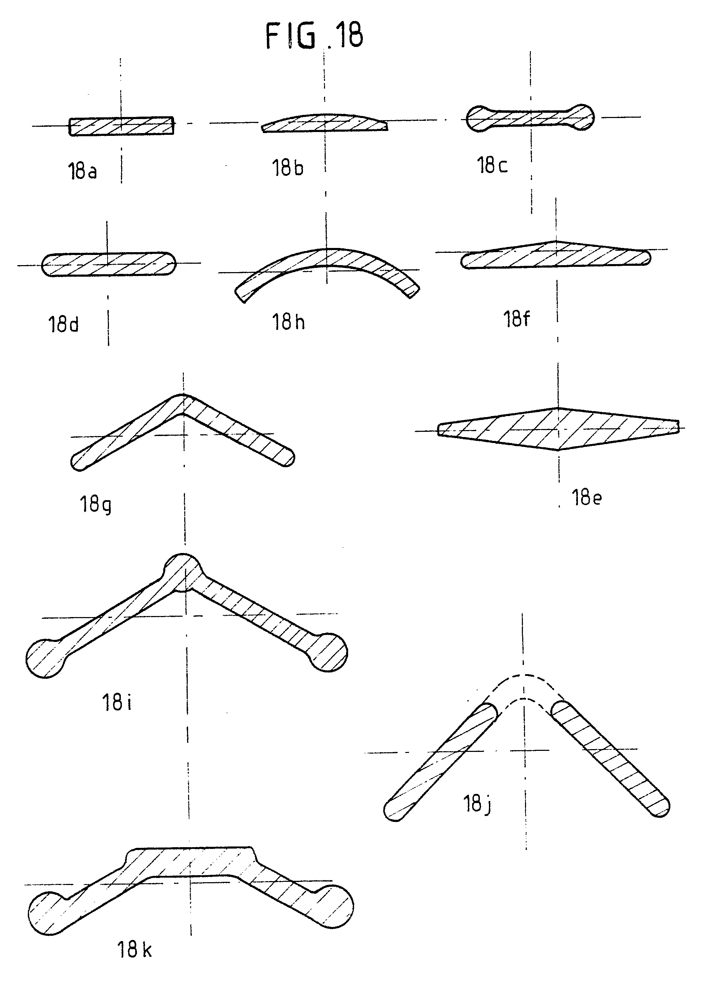

Les figures 18a à 18k représentent différentes formes que peuvent avoir les sections des baguettes 34, 35.

La figure 18a correspond à l'exemple de la figure 16, les baguettes ayant une section rectangulaire aplatie. A la figure 18b la section est lenticulaire plan convexe; à la figure 18c la section est rectangulaire aplatie avec deux renforcements circulaires aux extrémités; à la figure 18d la section est rectangulaire aplatie à bouts arrondis; la figure 18e représente un losange très aplati; la figure 18f est une variante de la figure 18b, la face concave étant faite de deux plans faisant un angle obtus très ouvert.

Au lieu d'avoir deux baguettes maintenues par des cavaliers de façon à faire entre elles un certain angle, on peut employer des profilés en V comme ceux qui sont représentés aux figures 18g à 18k.

Les baguettes 34 et 35 sont en acier à ressort, en fibre de verre ou en toute matière plastique ayant de bonnes caractéristiques d'élasticité.

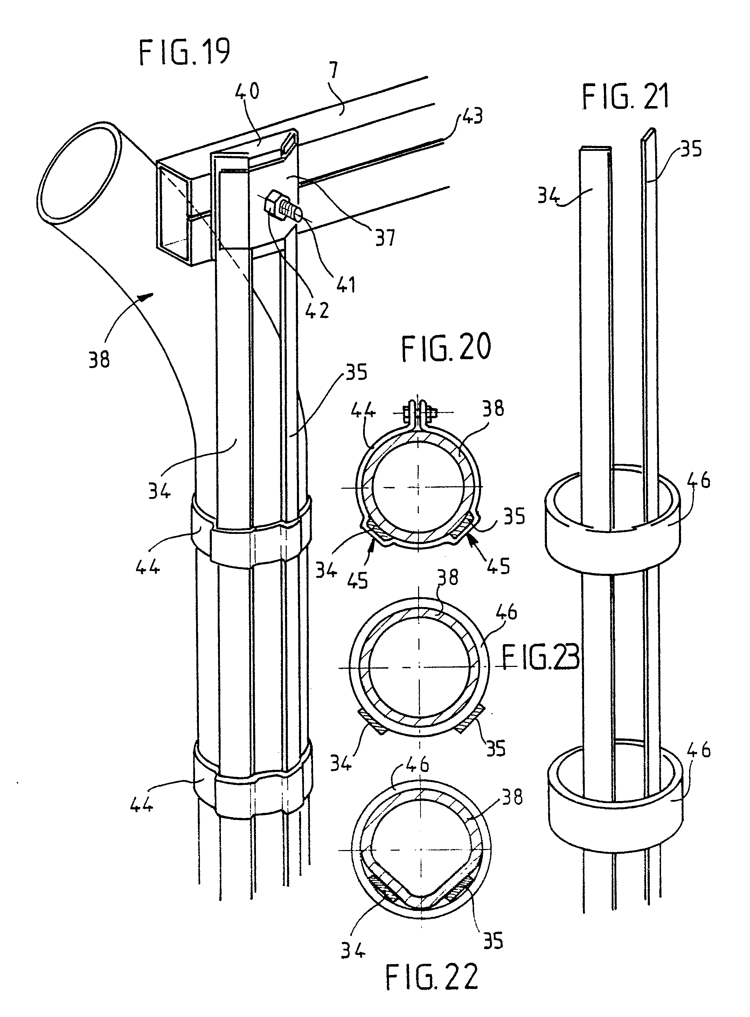

Les figures 19 à 26 montrent plusieurs variantes de montage des baguettes 34, 35 adaptées au guidage de tubes souples 38 destinés à desoendre profondément dans la végétation. Ces tubes 38 ont un diamètre relativement important afin de véhiculer un flux important d'air vers des pulseurs (non représentés) portés par les tiges formées par les baguettes .

La figure 19 montre comment les deux baguettes 34, 35 sont reliées à un bras horizontal 7 déjà représenté . Le bras 7 est formé par un tube ayant une section rectangulaire. Les baguettes 34, 35 sont dans l'exemple illustré sur la figure 19 fixées au bras 7 par l'intermédiaire d'une pièce de fixation 40 de forme prismatique. La pièce de fixation comporte deux faces longitudinales parallèle dont la plus grande se trouve en appui' contre l'une des surfaces longitudinales du bras 7. Par ailleurs, les surfaces tournées vers l'extérieur de la pièce de fixation 40 sont analogues aux surfaces externes du cavalier 36 et elles comportent également des rainures de guidages 36b (voir figure 16). La pièce 40 coopère également avec le couvercle 37 déjà décrit en référence aux figures 16 et 17, afin de retenir les baguettes 34, 35 par serrage.

La pièce de fixation 40 ainsi que le couvercle 37 sont traversés par une tige filetée d'un organe de serrage sous forme d'une vis 41 coopérant avec un écrou 42 serrant le couvercle contre la pièce.

La tête de la vis 41 se trouve à l'intérieur du bras creux 7 de manière à être déplaçable avec la tige le long du bras suivant une fente longitudinale 43 s'étendant sur toute la longueur de celui-ci, ce qui permet le réglage de la distance entre deux tiges voisines en fonction de la distance entre les rangs à traiter.

Les tubes souples 38 sont fixés aux baguettes 34, 35 à l'aide d'éléments annulaires sous forme de colliers de serrage 44 régulièrement espacés (voir figures 19 et 20). Les colliers 44 comportent deux parties en retrait 45 vers l'extérieur. Chaque partie en retrait 45 délimite avec la périphérie du tube 38 un espace dans lequel l'une des baguettes 34, 35 est reçue et guidée. Ces espaces sont lors du montage des colliers automatiquement alignés avec les rainures correspondantes 36d (voir figure 17) de la pièce de fixation 40 des baguettes 34, 35 au bras 7 de manière à assurer l'espacement et l'orientation imposés aux baguettes par la pièce 40.

Les figures 21 à 23 montrent une variante dans laquelle les éléments annulaires sont constitués par des anneaux de forme cylindrique 46. Les baguettes 34, 35 sont dans l'exemple illustré sur les figures 21 et 22 fixées aux surfaces internes des anneaux d'un emanière appropriée, par exemple par soudage ou collage. Le diamètre intérieur des anneaux est de préférence à peu près égal au diamètre extérieur du tube afin d'assurer un certain serrage des anneaux autour du tube.

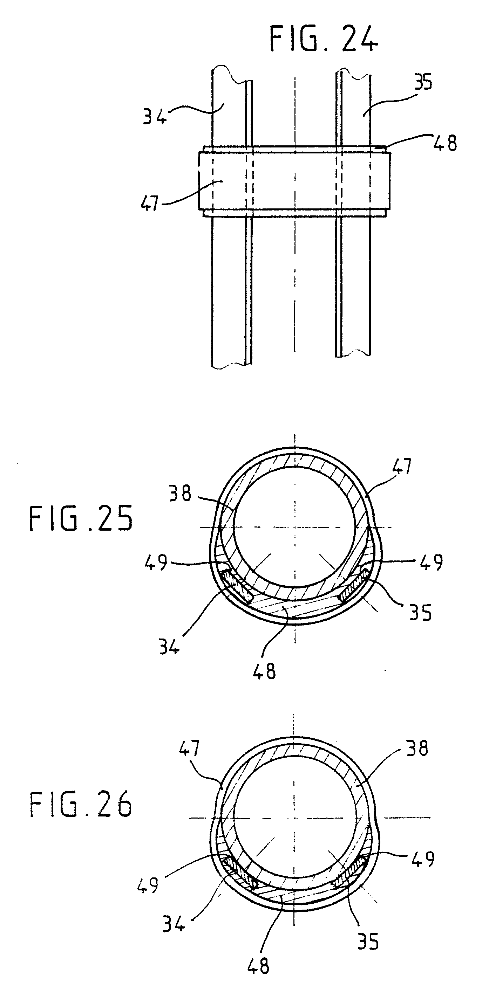

Comme le montre la figure 23, les baguettes 34, 35 peuvent également être fixées aux surfaces externes des anneaux 46. Le diamètre intérieur des anneaux 46 est dans ce cas de préférence légèrement inférieur au diamètre extérieur du tube afin d'assurer un certain serrage des anneaux autour du tube 38.

Les baguettes utilisées avec les anneaux 46 ont avantageusement la forme illustrée sur la figure 18h afin de s'adapter à la forme des anneaux.

Les tubes souples illustrés sur les figures 19 à 23 peuvent par ailleurs être du type à se gonfler par le passage de l'air et qui ne sont serrés par les colliers ou les anneaux que lors du fonctionnement de l'appareil.

Les figures 24 à 26 montrent une troisième variante dans laquelle les éléments annulaires sont constitués par des rubans élastiques 47.

L'espacement des baguettes 34, 35 l'une par rapport à l'autre ainsi que l'orientation de celles-ci sont maintenus par une pièce intercalaire rigide 48 ayant une section en forme de croissant disposée entre le ruban 47 et le tube 38. Cette pièce intercalaire 48 s'étend sur une partie de la périphérie du tube 38 et sa surface tournée vers le tube présente avantageusement la même courbure que celui-ci afin d'assurer un bon contact entre ces éléments.

La pièce intercalaire 48 comporte des rainures 49 de guidage et de maintien des baguettes 34, 35. Elles peuvent être disposées soit sur la surface de la pièce intercalaire tournée vers le ruban élastique 47 (voir figure 25), soit sur sa surface tournée vers le tube 38 (voir figure 26).

Finalement, il est à noter qu'avec des baguettes ayant les sections représentées sur les figures 18g à 18k les pièces intercalaires ne sont pas nécessaires pour maintenir l'orientation des tiges. On doit par ailleurs noter que les tiges suivant l'invention peuvent être utilisées sur toutes les rampes de pulvérisation connues utilisant des tiges descendantes.

Dans les divers exemples illustrés sur les figures, on n'a représenté que ce qui se rapporte à l'invention, c'est-à-dire les bras 3 et 33 et les barres 7 et 7a, sans représenter les tiges descendantes non relevables qui sont reliées directement au chassis 1 ou au tracteur et placées derrière les roues arrière.

## Revendications

1. Appareil de pulvérisation comportant au moins un bras relevable (3, 33), surplombant les cultures en position de travail et portant au moins une tige verticale descendante (8) auxquelles sont fixés des moyens de pulvérisation (9), caractérisé par le fait que les tiges descendantes (8) sont constituées de façon à pouvoir se plier facilement tout en présentant, lorsqu'elles sont droites, un seuil de résistance à la flexion, de telle sorte qu'en position normale du travail elles soient relativement rigides et que, une fois le seuil de résistance à la flexion passé, elles soient souples.

2. Appareil selon la revendication 1, dans lequel les tiges sont constituées par deux éléments aplatis sous forme de baguettes (34, 35) faisant entre elles un angle non nul compris entre 5 et 175°, qui est de préférence 90°.

3. Appareil selon la revendication 2, dans lequel les baguettes (34, 35) ont une section rectangulaire aplatie (18a), à extrémités arrondies (18d) ou munies de renforcements circulaires (18c), soit plan-convexe (18b) soit en losange aplati (18e).

4. Appareil selon la revendication 2, dans lequel les deux éléments aplatis sont solidaires l'un de l'autre de façon à constituer un profilé en V (18g, 18i, 18j, 18k) ou arrondi (18h).

5. Appareil selon la revendication 2 ou 3, dans lequel les deux baguettes plates (34, 35) sont séparées l'une de l'autre et maintenues assemblées l'une à l'autre par au moins un cavalier (36) à trois branches, les branches latérales (36b, 36c) faisant entre elles un angle non nul, qui est de préférence un angle de 90°.

6. Appareil selon la revendication 2 ou 3, dans lequel les deux baguettes plates (34, 35) sont séparées l'une de l'autre et maintenues assemblées l'une à l'autre par au moins un collier (44) disposé autour d'un tube souple (38) et comportant deux parties en retrait (45), chaque partie en retrait délimitant avec la périphérie du tube souple (38) un espace de réception et de guidage d'une baguette respective (34, 35).

7. Appareil selon la revendication 2 ou 3, dans lequel les deux baguettes plates (34, 35) sont maintenues assemblées l'une à l'autre par au moins un anneau (46) de guidage d'un tube souple (38), les baguettes étant fixées à l'anneau (46) de manière à s'étendre parallèlement à l'axe de celui-ci.

8. Appareil selon l'une quelconque des revendications 2 à 14, dans lequel les deux baguettes (34, 35) sont reliées à un tube souple (38) à l'aide d'au moins un ruban élastique (47) disposé autour de l'ensemble formé par le tube (38) et par les deux baguettes (34, 35).

9. Appareil selon la revendication 8, dans lequel une pièce intercalaire (48) ayant une section en forme de croissant est disposée entre le tube souple (38) et le ruban élastique (47), la pièce intercalaire étant pourvue de rainures (49) de guidage et de maintien des baguettes (34, 35).

10. Appareil selon l'une quelconque des revendications précédentes, caractérisé par le fait qu'il comporte en outre un châssis (1) muni d'un bras vertical (2), portant un bras relevable (3, 33) qui lui-même porte une barre horizontale (7, 7a) à laquelle sont fixées des tiges verticales descendantes (8), le bras relevable (3, 33) étant relié au châssis (1) par des moyens tels que lorsqu'il est relevé ou abaissé la barre horizontale se relève ou s'abaisse en demeurant parallèle à elle-même; de sorte que toutes les tiges descendantes (8) se relèvent ou s'abaissent simultanément de la même quantité, en demeurant parallèles à elles-mêmes.

11. Appareil de pulvérisation selon la revendication 10, dans lequel le bras relevable (3) est constitué de deux bras (3a, 3b) parallèles et de même longueur, fixés d'une part à leur extrémité intérieure au bras vertical (2) porté par le châssis (1) au moyen de deux axes horizontaux (4) et d'autre part à leur extrémité extérieure à une monture de fixation (5) au moyen de deux axes horizontaux (6) espacés l'un de l'autre de la même distance que les axes (4) de façon à former avec eux les quatre points d'articulation d'un parallélogramme déformable; la barre horizontale (7, 7a) portant les tiges descendantes étant portée par ladite monture de fixation.

12. Appareil selon la revendication 10, dans lequel le bras relevable (33) comporte un ensemble de galets (30, 31, 32) enserrant le bras vertical (2) de sorte que ledit bras peut monter et descendre en demeurant parallèle à lui-même par déplacement desdits galets (30, 31, 32) le long dudit bras vertical; le bras de relevage (33) portant à son extrémité une monture de fixation (5) portant la barre horizontale (7, 7a) à laquelle sont fixées les tiges descendantes (8).

13. Appareil selon la revendication 11 ou 12, dans lequel ledit bras horizontal (7) est fixé à ladite monture (5) de façon à pouvoir être fixé en toute position latérale voulue par coulissement.

14. Appareil selon l'une quelconque des revendications 10 à 13, dans lequel le bras vertical (2) portant le bras latéral relevable (3, 33) est monté sur le chassis (1) par des moyens lui permettant de pivoter autour d'un axe vertical (19) soit pour amener ledit bras en position repliée soit pour éviter un obstacle.

15. Appareil selon la revendication 14, dans lequel le bras vertical (2) est fixé à une pièce (20) montée à rotation sur un axe vertical (19), cette pièce (20) étant elle-même attelée à une deuxième pièce (21) articulée sur le même axe (19); ces deux pièces étant reliées l'une à l'autre par un vérin (26) et la deuxième pièce (21) étant maintenue en position par un système élastique à échappement (22, 23) de telle sorte que les deux pièces peuvent pivoter ensemble autour de l'axe (19) à l'encontre du système à échappement en cas de choc contre un obstacle ou que la pièce (20) puisse pivoter autour de l'axe (19) par rapport à la pièce (21) lorsque le vérin (26) est actionné.

16. Appareil selon la revendication 15, dans lequel les deux pièces (20, 21) articulées sur l'axe unique (19) sont toutes deux en forme de U, la pièce (21) en appui contre le système à échappement (22, 23) étant disposée à l'intérieur de la pièce (20) portant le bras vertical (2).

17. Appareil selon l'une quelconque des revendications 10 à 16, dans lequel le moyen de montage (10) de la barre (7) sur la monture de fixation (5) est constitué par une plaquette (10b) et un cavalier (10a) dont l'évidement central (10c) est légèrement inférieur a la largeur de la barre (7) afin de provoquer au serrage du cavalier (10a) sur la plaquette (10b) un pinçage de la barre (7) par déformation élastique du cavalier (10a).

18. Appareil selon l'une quelconque des revendications 10 à 17, dans lequel la barre horizontale portant les tiges descendantes (8) est en deux parties (7 et 7a), la première partie (7) étant portée par la monture de fixation (5) et la deuxième partie étant articulée de façon à pouvoir être rabattue vers le haut.

19. Appareil selon l'une quelconque des revendications 10 à 18, dans lequel les moyens de pulvérisation (9) sont alimentés par des canalisations (14) raccordées à un boîtier de distribution (13) porté par la monture de fixation (5) de façon que lorsque le bras relevable (3, 33) est pivoté vers l'avant en position repliée, le boîtier de distribution (13) arrive à portée du conducteur du tracteur.

20. Appareil selon les revendications 11 et 14, dans lequel les axes géométriques des axes (4) intérieurs du bras (3) et de l'axe (19) de pivotement du bras vertical (2) sont dans un même plan.

FIG.1

FIG.6

FIG.5

FIG.2

FIG.3

FIG.4

FIG.7

FIG.8

FIG.9

FIG.10

FIG.11

FIG.12

FIG.13

FIG.14

FIG.15

# FIG.16

# FIG.17

# FIG.18

18a

18b

18c

18d

18h

18f

18g

18e

18i

18j

18k

FIG.19

FIG.20

FIG.21

FIG.22

FIG.23

FIG. 24

FIG. 25

FIG. 26

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-2706133 (H.D.NORTH) <br> * colonne 1, lignes 34 - 37; figures 4-5 * <br> * colonne 2, lignes 7 - 57 * <br> --- | 1 | A01M7/00 |
| D,A | FR-A-2409003 (ETABLISSEMENTS BOBARD JEUNE) <br> * page 2, lignes 25 - 37; figure 1 * <br> --- | 1 | |
| A | DE-B-1028380 (MAUSER KG.) <br> * colonne 2, ligne 36 - colonne 3, ligne 21; figures 1-2 * <br> --- | 1 | |
| A | US-A-3866834 (J.C.SHANNON) <br> * abrégé; figure 1 * <br> --- | 1 | |
| A | FR-A-1091012 (E.BOBARD) <br> * le document en entier * <br> ----- | 1 | |
| | | | **DOMAINES TECHNIQUES RECHERCHES (Int. Cl.5 )** <br><br> A01M |

Le présent rapport a été établi pour toutes les revendications

| Lieu de la recherche | Date d'achèvement de la recherche | Examinateur |
|---|---|---|
| LA HAYE | 04 OCTOBRE 1990 | NEHRDICH H.J |